(19) Europäisches Patentamt
European Patent Office
Office européen des brevets

(11) Veröffentlichungsnummer: **0 002 176**
**B1**

# (12) EUROPÄISCHE PATENTSCHRIFT

(45) Veröffentlichungstag der Patentschrift: **15.06.83**

(21) Anmeldenummer: **78100945.1**

(22) Anmeldetag: **20.09.78**

(51) Int. Cl.³: **C 08 F 2/26,** B 01 F 17/14, C 08 K 5/53 // (C08F2/26, 218/08)

(54) **Wässrige Kunststoffdispersion auf Basis von Vinylpolymeren und Herstellungsverfahren hierzu.**

(30) Priorität: **29.09.77 DE 2743764**

(43) Veröffentlichungstag der Anmeldung: **13.06.79 Patentblatt 79/12**

(45) Bekanntmachung des Hinweises auf die Patenterteilung: **15.06.83 Patentblatt 83/24**

(84) Benannte Vertragsstaaten: **BE CH DE FR GB LU NL SE**

(56) Entgegenhaltungen:
**DE-A-2 441 783**
**DE-A-2 535 374**
**DE-A-2 651 048**
**DE-B-2 333 417**
**US-A-3 963 688**
**Kunststoff-Handbuch, Band II, S. 47—49, 1963**

(73) Patentinhaber: **HOECHST AKTIENGESELLSCHAFT, Postfach 80 03 20, D-6230 Frankfurt/Main 80 (DE)**

(72) Erfinder: **Nölken, Ernst, Dr., Dachbergstrasse 16a, D-6232 Bad Soden am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 002 176 B1

Wäßrige Kunststoffdispersion auf Basis von Vinylpolymeren und Herstellungsverfahren hierzu

Die Erfindung bezieht sich auf eine wäßrige Kunststoffdispersion auf Basis von Vinylpolymeren, die ein wasserlösliches Ammoniumsalz oder Alkalisalz als Emulgator enthält, und ein Verfahren zur ihrer Herstellung.

Es ist bekannt, daß Vinylpolymere durch Emulsionspolymerisation in Gegenwart von oberflächenaktiven Verbindungen hergestellt werden können; die erhaltenen Latices sind allerdings in aller Regel instabil, wenn sie keine weiteren Stabilisatoren enthalten. Durch Verwendung größerer Mengen von anionisch wirksamen Emulgatoren kann zwar die Stabilität des Latex gegen mechanische Beanspruchung wie Pumpen und Rühren erhöht werden, aber gleichzeitig wird dadurch die Thermostabilität der Polymeren oder die Wasserfestigkeit des aus dem Latex erhaltenen Films verschlechtert. Ähnliches gilt für die zusätzliche Verwendung von Schutzkolloiden oder Copolymeren von ungesättigten Säuren. Ferner ist insbesondere bekannt, daß Alkalisalze oder Ammoniumsalze von Alkyl-Phosphonaten in wäßrigen Kunststoffdispersionen als anionische Emulgatoren dienen (vgl. deutsche Offenlegungsschrift 2 535 374).

Aufgabe der Erfindung ist die Schaffung einer wäßrigen Kunststoffdispersion mit hoher Scherstabilität und guter Thermostabilität, die vor allem als Bindemittel für Dispersionsfarben einsetzbar ist und Filme mit guter Naßhaftung ergibt.

Die Erfindung betrifft eine wäßrige Kunststoffdispersion, die ein Vinylpolymer und ein wasserlösliches Ammoniumsalz oder Alkalisalz als Emulgator enthält und dadurch gekennzeichnet ist, daß der Emulgator ein Salz eines Alkanphosphonsäure-monoalkylesters der Formel (II)

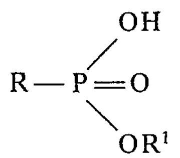

(II)

in der R einen linearen Alkylrest mit 6 bis 24, vorzugsweise 8 bis 18 Kohlenstoffatomen und $R^1$ einen Alkylrest mit 1 bis 8, vorzugsweise 1 bis 4 Kohlenstoffatomen bedeuten, oder ein Gemisch eines solchen Salzes mit einer Alkanphosphonsäure der Formel (I)

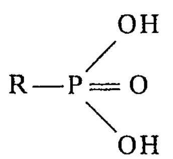

(I)

in der R einen linearen Alkylrest mit 6 bis 24, vorzugsweise 8 bis 18 Kohlenstoffatomen bedeutet, oder einem Alkanphosphonsäure-monoalkylester der Formel (II) ist, der Emulgator in einer Menge von 0,1 bis 5 Gewichtsprozent (bezogen auf das Vinylpolymer) vorliegt und die Dispersion gegebenenfalls bis zu 10 Gewichtsprozent (bezogen auf die Dispersion) üblicher Zusatzmittel enthält.

Die Erfindung betrifft ferner ein Verfahren zur Herstellung der vorgenannten Kunststoffdispersion unter Verwendung des vorerwähnten Salzes oder des Salz-Säure-Gemisches als Emulgator.

Geeignet sind beispielsweise Salze des Monomethyl-, Monoäthyl-, Monopropyl- und Mono-n-butylesters der n-Hexanphosphonsäure, n-Octanphosphonsäure, n-Nonanphosphonsäure, n-Decanphosphonsäure, n-Dodecanphosphonsäure, n-Tetradecanphosphonsäure und n-Hexadecanphosphonsäure.

Die erfindungsgemäß als Emulgatoren verwendeten Salze von Alkanphosphonsäure-monoalkylestern müssen in Wasser löslich sein. Geeignet sind Alkalisalze, z. B. Natriumsalze und Kaliumsalze, und Ammoniumsalze, d. h. Salze des Ammoniaks und Salze von primären, sekundären oder tertiären aliphatischen Aminen. Als aliphatische Amine eignen sich vorzugsweise Mono-, Di- und Trialkylamine, deren Alkylreste gleich oder verschieden sind und jeweils 1 bis 4 Kohlenstoffatome aufweisen und mit einem Hydroxylrest substituiert sein können. Beispielsweise seien genannt Methylamin, Äthylamin, Propylamin, Dimethylamin, Diäthylamin, Dipropylamin, Trimethylamin, Triäthylamin, Tripropylamin, Äthanolamin, Diäthanolamin, Triäthanolamin, N,N-Dimethylamino-äthanol und 2-Amino-2-methyl-propanol-(1). Ebenfalls verwendbar sind cyclische Amine, z. B. Piperidin, Morpholin und Piperazin, sowie lineare Polyamine, z. B. Äthylendiamin, Diäthylentriamin und Triäthylentetramin.

Die Alkanphosphonsäuren werden hergestellt durch Umlagerung von Trialkylphosphiten oder Umsetzung von Dialkylphosphiten mit Olefinen in Gegenwart von Peroxiden und anschließende vollständige Hydrolyse der erhaltenen Alkanphosphonsäurediester. Die Alkanphosphonsäure-monoalkylester werden durch Teilhydrolyse der vorgenannten Alkanphosphonsäurediester hergestellt (vgl. z. B. deutsche Patentschrift 2 441 783). Die erfindungsgemäß eingesetzten Salze werden schließlich durch Neutralisation der Alkanphosphonsäure-monoester mit Basen gewonnen. Als Basen werden Alkalihydroxide, Alkalicarbonate, Ammoniak und Ammoniumcarbonat sowie die vorgenannten Amine

verwendet. Bei Einsatz der Alkanphosphonsäuren kann die Neutralisation teilweise oder vollständig erfolgen, so daß primäre oder sekundäre Salze gebildet werden.

Die Polymerisation der Vinylmonomeren erfolgt in Gegenwart mindestens eines als Emulgator wirkenden Salzes eines Alkanphosphonsäure-monoalkylesters. Hierbei kann das Salz dem Polymerisationsgemisch als solches zugesetzt werden oder es kann in situ durch Neutralisation eines Alkanphosphonsäure-monoalkylesters gebildet werden. Der Emulgator kann vor Beginn der Polymerisation vorgelegt oder teilweise vorgelegt und während der Polymerisation zudosiert werden.

Die im erfindungsgemäßen Verfahren verwendete Menge an Alkanphosphonsäure-monoalkylester-Salz beträgt 0,1 bis 5, vorzugsweise 0,3 bis 3 Gewichtsprozent, bezogen auf die Gesamtmenge der Vinylmonomeren. Die Salze können einzeln eingesetzt werden oder in Kombination miteinander, wobei vorzugsweise Gemische von Salzen solcher Alkanphosphonsäure-monoalkylester verwendet werden, deren am Phosphoratom gebundene Alkylreste unterschiedlich sind. Die Salze können auch im Gemisch mit freier Alkanphosphonsäure oder freiem Alkanphosphonsäure-monoalkylester angewendet werden; der Salz-Anteil in solchen Gemischen beträgt 10 bis 90, vorzugsweise 40 bis 80 Gewichtsprozent. Ferner ist es möglich, die Salze in Kombination mit bekannten oberflächenaktiven Verbindungen zu verwenden, z. B. Alkylsulfaten, Alkansulfonaten, Sulfobernsteinsäureestern und Estern der Phosphorsäure mit Alkoholen, oxäthylierten Alkoholen oder Alkylphenolen.

Im Rahmen der Erfindung sind alle in wäßriger Dispersion polymerisationsfähigen Vinylmonomeren, d. h. olefinisch ungesättigte Verbindungen, geeignet, vor allem Verbindungen der Formel (III)

$$H_2C=CH-R^2 \qquad (III)$$

in der $R^2$ ein Wasserstoffatom, einen Alkylrest mit 1 bis 4 Kohlenstoffatomen, einen Alkoxyrest mit 1 bis 4 Kohlenstoffatomen, einen Alkylcarboxyrest mit 2 bis 12, vorzugsweise 2 bis 10 Kohlenstoffatomen, eine Nitrilgruppe, ein Halogenatom, vorzugsweise ein Chloratom, einen Phenylrest oder einen Alkoxycarbonylrest mit 2 bis 12, vorzugsweise 2 bis 9 Kohlenstoffatomen bedeutet. Anstatt eines einzelnen Vinylmonomeren kann auch ein Gemisch mehrerer Vinylmonomerer verwendet werden.

Geeignete Vinylmonomere sind insbesondere Olefine, z. B. Äthylen und Isobutylen, Vinyläther, z. B. Vinylmethyläther, Vinyläthyläther und Vinyl-n-butyläther, Vinylester von aliphatischen Monocarbonsäuren, z. B. Vinylacetat, Vinylpropionat, Vinylbutyrat, Vinyllaurat und Vinyldecanate, Vinylidenchlorid, Acrylnitril, Vinylchlorid, Styrol, Acrylsäureester von einwertigen Alkanolen, z. B. Methylacrylat, Äthylacrylat, Butylacrylat und 2-Äthylhexylacrylat, sowie Methacrylsäureester von einwertigen Alkanolen, z. B. Methylmethacrylat, Äthylmethacrylat, Butylmethacrylat und 2-Äthylhexylmethacrylat. Vorzugsweise wird ein Vinylester verwendet, gegebenenfalls zusammen mit einem oder zwei weiteren Vinylmonomeren.

Bei Verwendung von leicht verseifbaren Vinylmonomeren, z. B. Vinylestern, empfiehlt es sich, ein primäres Salz einer Alkanphosphonsäure einzusetzen und das Polymerisationsmedium auf einem pH-Wert von 3 bis 7, vorzugsweise 4,5 bis 6 zu halten.

Die Polymerisation der jeweiligen Vinylmonomeren erfolgt unter an sich bekannten Bedingungen in Gegenwart eines radikalbildenden Initiators, vorzugsweise einer Peroxyverbindung oder einer aliphatischen Azoverbindung; geeignete Initiatoren sind beispielsweise die Alkali- oder Ammoniumsalze der Peroxydischwefelsäure oder der Peroxydiphosphorsäure sowie Azo-$\gamma,\gamma'$-bis(4-cyanvaleriansäure). Der Initiator wird in einer Menge von 0,05 bis 1, vorzugsweise von 0,1 bis 0,4 Gewichtsprozent, bezogen auf die Gesamtmenge der Vinylmonomeren, eingesetzt. Gegebenenfalls wird der Initiator zusammen mit einem Reduktionsmittel verwendet, z. B. mit einem Alkalisulfit, Alkalithiosulfat, Alkalidithionit, Formaldehydnatriumsulfoxylat oder einem Schwermetallsalz. Der Initiator kann vor Beginn der Polymerisation vorgelegt oder dem Polymerisationsgemisch zudosiert werden; das Gleiche gilt für das Reduktionsmittel. Die Polymerisation wird bei einer Temperatur von 25 bis 90° C, vorzugsweise von 40 bis 75° C durchgeführt.

Die erfindungsgemäße Kunststoffdispersion kann auch Zusatzmittel enthalten, die die Viskosität, das Netz- und Dispergiervermögen, die Gefrier- und Elektrolytstabilität und das Schaumverhalten günstig beeinflussen. Die Menge der Zusatzmittel beträgt im allgemeinen insgesamt höchstens 10 Gewichtsprozent, vorzugsweise 1 bis 5 Gewichtsprozent, bezogen auf die Kunststoffdispersion.

Als Verdickungsmittel dienen Cellulosederivate, z. B. Methyl-, Hydroxyäthyl-, Hydroxypropyl- und Carboxymethylcellulose, Poly(vinylalkohol), Poly(vinylpyrrolidon), Poly(äthylenglykol), Salze der Poly(acrylsäure) und Salze von Acrylsäure/Acrylamid-Copolymeren.

Als Netz- und Dispergiermittel eignen sich Natriumpolyphosphat, Salze niedermolekularer Poly(acrylsäure), Salze der Poly(äthensulfonsäure), Salze der Poly(vinylphosphonsäure, Salze der Poly(maleinsäure) und Salze von Copolymeren der Maleinsäure mit Äthylen, 1-Olefinen mit 3 bis 18 Kohlenstoffatomen, Vinylalkyläthern mit 3 bis 14 Kohlenstoffatomen und/oder Styrol.

Zur Erhöhung der Gefrier- und Elektrolytstabilität können der Dispersion monomere und polymere 1,2-Diole, z. B. Glykol, Propylenglykol-(1,2) und Butylenglykol-(1,2), oder oxäthylierte Verbindungen zugesetzt werden, z. B. Umsetzungsprodukte von Äthylenoxid mit langkettigen Alkanolen, Aminen, Carbonsäuren, Carbonsäureamiden, Alkylphenolen, Poly(propylenglykol) oder Poly(butylenglykol).

Die minimale Filmbildetemperatur (Weißpunkt) der Kunststoffdispersion kann erniedrigt werden

durch Zusatz von Lösungsmitteln, z. B. Äthylenglykol, Butylglykol, Äthylglykolacetat, Äthyldiglykolacetat, Butylglykolacetat, Butyldiglykolacetat, Benzin oder alkylierte Aromaten. Als Entschäumungsmittel sind beispielsweise Poly(propylenglykol) und Polysiloxane geeignet.

Die erfindungsgemäße Kunststoffdispersion findet Anwendung als Überzugsmittel sowie als Mittel zum Imprägnieren, Beschichten und Verkleben von natürlichen oder synthetischen Materialien, z. B. Holz, Papier, Metalle, Textilien und Kunststoffe. Sie ist besonders geeignet als Bindemitteldispersion für Pigmente und Füllstoffe in Dispersionsfarben.

Die Erfindung wird durch die folgenden Beispiele näher erläutert. Die Angaben »Teile« und »%« bedeuten hierbei jeweils »Gewichtsteile« und »Gewichtsprozent«, wenn nicht anders angegeben.

Beispiel 1

A) In einem Rührkolben mit Innenthermometer, Rückflußkühler Gaseinlaß und 3 Tropftrichtern werden 550 Teile elektrolytfreies Wasser sowie 0,9 Teile Ammoniumpersulfat vorgelegt. Die Vorlage wird 15 min lang mit Stickstoff gespült und auf 60° C erhitzt. Ein Monomerengemisch aus 592 Teilen Vinylacetat und 148 Teilen des Vinylesters eines Gemisches von tertiären, gesättigten aliphatischen Carbonsäuren mit 10 Kohlenstoffatomen sowie eine Lösung von 9 Teilen Natriumsalz des n-Hexadecanphosphonsäuremonomethylesters (hergestellt durch Verseifung von n-Hexadecanphosphonsäuredimethylester mit Natronlauge) in 100 Teilen Wasser (pH-Wert 10,1) werden im Laufe von 3 h zudosiert. Die Innentemperatur wird durch Kühlen auf 60° C, der pH-Wert während der Polymerisation durch Zudosieren von 14 ml 1,25%iger Sodalösung auf 5 gehalten. Nach Zudosieren der Monomeren wird eine Lösung von 0,45 Teilen Ammoniumpersulfat in 10 Teilen Wasser nachgegeben, und das Gemisch wird 30 min lang bei 75° C nachgerührt. Nach Kühlen der Dispersion auf Raumtemperatur wird der pH-Wert mit 36 Teilen 1,25%iger Sodalösung auf 6 eingestellt.
Man erhält eine koagulatfreie, niedrigviskose Dispersion mit einem Feststoffgehalt von 50,8%. Der mittlere Durchmesser der Polymerpartikel beträgt 0,268 µm. Der bei Raumtemperatur hergestellte Film zeigt nach 20 min noch kein Weißanlaufen. Die Dispersion erweist sich im Schertest, bei dem der Latex 2 min lang bei einer Rührgeschwindigkeit von 5000 Upm gerührt wird, als stabil. Der Film nach 16 Stunden bei 110° C ist farblos bis ganz schwach gelblich.

B) Mit der Dispersion wird eine Glanzfarbe hergestellt, und der daraus hergestellte Film wird auf Naßhaftung geprüft. Dazu wird zunächst eine Pigmentpaste folgender Zusammensetzung hergestellt und zur Pigmentdispergierung 10 min lang bei einer Rührgeschwindigkeit von 3000 Upm gerührt:

| | |
|---|---|
| Wasser | 41 Teile |
| 3%ige Hydroxyäthylcellulose-Lösung | 15,6 Teile |
| Natriumtripolyphosphat | 0,4 Teile |
| 25%ige Ammoniaklösung | 1,0 Teile |
| 30%iges Ammoniumpolyacrylat | 3,0 Teile |
| Polysiloxan-Entschäumer | 3,0 Teile |
| Titandioxyd (Rutil) | 175 Teile |
| Propylenglykol-(1,2) | 10 Teile |

900 Teile der nach A) erhaltenen Kunststoffdispersion werden mit konzentrierter Ammoniaklösung auf einen pH-Wert von 9,5 eingestellt, mit 22,5 Teilen 20%iger Ammoniumlauratlösung und 135 Teilen 10%iger Hydroxyäthylcellulose-Lösung verrührt und in die obige Pigmentpaste eingerührt. Anschließend wird das Gemisch noch mit einer Mischung aus 10 Teilen Butyldiglykolacetat und 27 Teilen Propylenglykol-(1,2) verrührt.
Mit der erhaltenen Farbe werden Anstriche auf einem Alkydharzanstrich hergestellt und nach 24stündigem Trocknen bei 23° C mit einer nassen Schweinsborstenbürste auf ihre Haftung getestet. Die Anstriche sind nach 3000 Doppelbürstenstrichen noch unbeschädigt.

Beispiel 2

In einer mit Innenthermometer, Rückflußkühler und 2 Tropftrichtern versehenen Rührapparatur werden 460 Teile elektrolytfreies Wasser vorgelegt und mit Stickstoff gespült. Nach Einstellen der Innentemperatur auf 45° C wird eine Lösung von 0,9 Teilen Ammoniumpersulfat in 20 Teilen Wasser zugesetzt sowie 50% einer Lösung von 15 Teilen n-Decanphosphonsäuremonomethylester in 200 Teilen Wasser, die mit 14 Volumenteilen 20%iger Kalilauge auf einen pH-Wert von 6 eingestellt ist. Die Innentemperatur wird auf 60° C erhöht, und im Laufe von 3 h werden 750 Teile Vinylacetat sowie die restlichen 50% der Decanphosphonsäureesterlösung zudosiert. Danach wird eine Lösung von 0,45 Teilen Ammoniumpersulfat in 30 Teilen Wasser zugesetzt, 1 h lang bei 75° C nachgerührt und auf

Raumtemperatur abgekühlt. Der Monomethylester wurde durch saure Teilverseifung des Decanphosphonsäuredimethylesters hergestellt.

Man erhält eine niedrigviskose Poly(vinylacetat)-Dispersion mit einem Feststoffgehalt von 51,3%. Ihr pH-Wert wird von 4,6 mit Ammoniaklösung auf 6 eingestellt. Der mittlere Durchmesser der Polymerpartikel beträgt 0,21 µm, der Restmonomerengehalt 0,24%, der K-Wert des Polymeren 104,4 (bestimmt im Dimethylformamid bei 20° C).

Beispiel 3

27,3 Teile n-Decanphosphonsäuremonomethylester, gelöst in 575 Teilen Wasser, werden mit 50%iger Natronlauge neutralisiert (pH-Wert = 9) und in der im Beispiel 2 beschriebenen Apparatur auf 80° C erhitzt. 50% einer Lösung von 3,4 Teilen $K_2S_2O_8$ in 65 Teilen Wasser werden zugegeben, und eine Mischung aus 375 Teilen Methylmethacrylat und 375 Teilen Butylacrylat wird im Laufe von 3,5 h zudosiert. Nachdem die Hälfte der Monomeren zugegeben ist, werden 35% der $K_2S_2O_8$-Lösung zudosiert, die restlichen 15% nach Zudosierung der Monomeren. Dann wird das Gemisch 45 min lang bei 90° C nachgerührt und anschließend auf Raumtemperatur abgekühlt. Man erhält eine viskose und koagulatfreie Dispersion mit einem Feststoffgehalt von 55,4%. Der mittlere Durchmesser der Polymerteilchen beträgt 0,1 µm. Die Dispersion erweist sich im Schertest bei 5000 Upm als stabil.

**Patentansprüche**

1. Wäßrige Kunststoffdispersion, enthaltend ein Vinylpolymer und ein wasserlösliches Salz des Ammoniaks oder eines primären, sekundären oder tertiären aliphatischen Amins oder Alkalisalz als Emulgator, dadurch gekennzeichnet, daß der Emulgator ein Salz eines Alkanphosphonsäuremonoalkylesters der Formel (II)

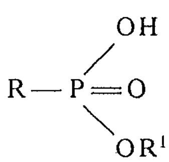

(II)

in der R einen linearen Alkylrest mit 6 bis 24 Kohlenstoffatomen bedeutet und $R^1$ einen Alkylrest mit 1 bis 8 Kohlenstoffatomen darstellt, oder ein Gemisch eines solchen Salzes mit einer Alkanphosphonsäure der Formel (I)

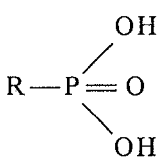

(I)

in der R einen linearen Alkylrest mit 6 bis 24 Kohlenstoffatomen bedeutet, oder einem Alkanphosphonsäuremonoalkylester der Formel (II) ist, der Emulgator in einer Menge von 0,1 bis 5 Gewichtsprozent (bezogen auf das Vinylpolymer) vorliegt und die Dispersion gegebenenfalls bis zu 10 Gewichtsprozent (bezogen auf die Dispersion) üblicher Zusatzmittel enthält.

2. Verfahren zur Herstellung einer wäßrigen Kunststoffdispersion durch Polymerisieren mindestens eines Vinylmonomeren in wäßriger Dispersion in Gegenwart eines wasserlöslichen Salzes des Ammoniaks oder eines primären, sekundären oder tertiären aliphatischen Amins oder Alkalisalzes als Emulgator unter an sich bekannten Bedingungen, dadurch gekennzeichnet, daß als Emulgator ein Salz eines Alkanphosphonsäuremonoalkylesters der Formel (II)

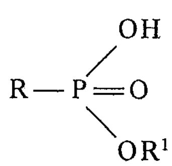

in der R einen linearen Alkylrest mit 6 bis 24 Kohlenstoffatomen bedeutet und $R^1$ einen Alkylrest mit 1 bis 8 Kohlenstoffatomen darstellt, oder ein Gemisch eines solchen Salzes mit einer Alkanphosphonsäure der Formel (I)

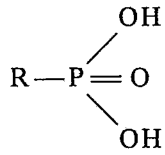

in der R einen linearen Alkylrest mit 6 bis 24 Kohlenstoffatomen bedeutet, oder mit einem Alkanphosphonsäuremonoalkylester der Formel (II) in einer Menge von 0,1 bis 5 Gewichtsprozent (bezogen auf die Gewichtsmenge der Vinylmonomeren) verwendet wird und der Dispersion gegebenenfalls bis zu 10 Gewichtsprozent (bezogen auf die Dispersion) üblicher Zusatzmittel zugesetzt werden.

3. Verwendung der Kunststoffdispersion gemäß Anspruch 1 als Überzugsmittel, als Mittel zum Imprägnieren, Beschichten und Verkleben von natürlichen oder synthetischen Materialien oder als Bindemitteldispersion für Pigmente und Füllstoffe in Dispersionsfarben.

4. Dispersionsfarbe, enthaltend als Bindemitteldispersion für Pigmente und Füllstoffe eine Kunststoffdispersion gemäß Anspruch 1.

**Claims**

1. Aqueous plastics dispersion containing a vinyl polymer and a water-soluble salt of a ammonia or of a primary, secondary or tertiary aliphatic amine of an alkali metal salt as emulsifier, characterised in that the emulsifier is a salt of an alkane phosphonic acid monoalkyl ester of the formula (II)

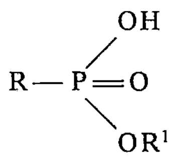
(II)

in which R means a linear alkyl radical having from 6 to 24 carbon atoms and $R^1$ represents an alkyl radical having from 1 to 8 carbon atoms, or a mixture of such a salt with an alkane phosphonic acid of the formula (I)

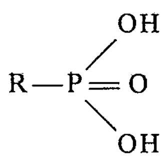
(I)

in which R means a linear alkyl radical having from 6 to 24 carbon atoms, or with an alkane phosphonic acid monoalkyl ester of the formula (II), the emulsifier is present in an amount of from 0.1 to 5 percent by weight (relative to the vinylpolymer), and the dispersion optionally contains up to 10 percent by weight (relative to the dispersion) of usual additives.

2. Process for the preparation of an aqueous plastics dispersion by polymerising at least one vinyl monomer in aqueous dispersion in the presence of a watersoluble salt of a ammonia or of a primary, secondary or tertiary aliphatic amine or an alkali metal salt as emulsifier under conditions known per se, characterised in that as emulsifier there is used a salt of an alkane phosphonic acid mono-alkyl ester of the formula (II)

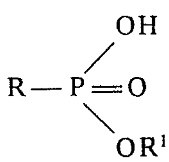
(II)

in which R means a linear alkyl radical having from 6 to 24 carbon atoms and $R^1$ represents an alkyl radical having from 1 to 8 carbon atoms, or a mixture of such a salt with an alkane phosphonic acid of the formula (I)

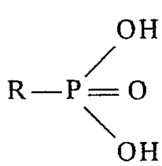
(I)

in which R means a linear alkyl radical having from 6 to 24 carbon atoms, or with an alkane phosphonic acid monoalkyl ester of the formula (II), in an amount of from 0.1 to 5 percent by weight (relative to the amount by weight of the vinyl monomers) and, optionally, up to 10 percent by weight (relative to the dispersion) of usual additives are added to the dispersion.

3. Use of the plastics dispersion according to claim 1 as coating agent, as an agent for impregnating, coating and bonding natural or synthetic materials, or as binder dispersion for pigments and fillers in dispersion paints.

4. Dispersion paint, containing a plastics dispersion according to claim 1 as binder dispersion for pigments and fillers.

**Revendications**

1. Dispersion aqueuse de matière plastique contenant un polymère vinylique et, comme émulsionnant, un sel hydrosoluble de l'ammoniac ou d'une amine aliphatique primaire, secondaire ou tertiaire ou un sel de métal alcalin, dispersion caractérisée en ce qu'elle contient, comme émulsionnant, un sel d'un mono-ester alkylique d'acide alcane-phosphonique répondant à la formule (II)

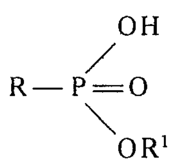

(II)

dans laquelle R représente un radical alkyle linéaire contenant de 6 à 24 atomes de carbone et $R^1$ un radical alkyle contenant de 1 à 8 atomes de carbone, ou un mélange d'un tel sel et d'un acide alcane-phosphonique répondant à la formule (I)

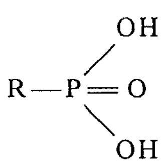

(I)

dans laquelle R représente un radical alkyle linéaire contenant de 6 à 24 atomes de carbone, ou d'un mono-ester alkylique d'acide alcane-phosphonique répondant à la formule (II), l'émulsionnant est présent en une quantité de 0,1 à 5% en poids (par rapport au polymère vinylique) et la dispersion contient éventuellement jusqu'à 10% en poids (par rapport à la dispersion) d'additifs usuels.

2. Procédé de préparation d'une dispersion aqueuse de matière plastique selon lequel on polymérise au moins un monomère vinylique en dispersion aqueuse, en présence d'un sel hydrosoluble de l'ammoniac ou d'une amine aliphatique primaire, secondaire ou tertiaire ou d'un sel de métal alcalin, jouant le rôle d'émulsionnant, dans des conditions connues, ce procédé étant caractérisé en ce qu'on utilise, comme émulsionnant, un sel d'un monoester-alkylique d'acide alcane-phosphonique répondant à la formule (II)

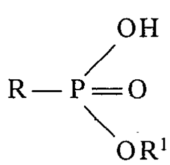

(II)

dans laquelle R représente un radical alkyle linéaire contenant de 6 à 24 atomes de carbone et $R^1$ un radical alkyle contenant de 1 à 8 atomes de carbone, ou un mélange d'un tel sel et d'un acide alcane-phosphonique répondant à la formule (I)

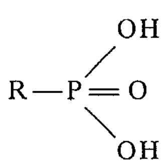

(I)

dans laquelle R représente un radical alkyle linéaire contenant de 6 à 24 atomes de carbone, ou d'un mono-ester alkylique d'un acide alcane-phosphonique de formule (II), en une quantité de 0,1 à 5% en poids (par rapport à la quantité totale des monomères vinyliques), et on ajoute éventuellement à la

dispersion jusqu'à 10% en poids (par rapport à la dispersion) d'additifs usuels.

3. Application de la dispersion de matière plastique selon la revendication 1 comme produit de revêtement, comme produit pour l'imprégnation, l'enduction et le collage de matières naturelles ou synthétiques ou comme dispersion liante pour des pigments et des charges dans des peintures-dispersions.

4. Peinture-dispersion contenant, comme dispersion liante pour des pigments et des charges, une dispersion de matière plastique selon la revendication 1.